# EUROPEAN PATENT APPLICATION

(11) **EP 4 213 161 A1**
(43) Date of publication of application: **19.07.2023**
(21) Application number: 22305046.9
(22) Date of filing: 18.01.2022
(51) Int. Cl.: G21C 3/06, G21C 3/07, G21C 3/20, G21C 21/02

(54) **NUCLEAR FUEL ELEMENT CONTAINING A CORE MADE OF FISSILE MATERIAL AND A REINFORCEMENT COVER AND METHOD OF MANUFACTURING THE SAME**

(71) Applicant: Framatome, 92400 Courbevoie (FR)
(72) Inventor: Anantha Phani Kiran Kumar, NIMISHAKAVI, DALEVILLE, 24083 (US)
(74) Representative: Lavoix

(57) **Abstract**

The nuclear fuel element is configured for insertion into a cladding tube of a nuclear fuel rod, the nuclear fuel element extending along a central axis and comprising a fissile core made of fissile material and a reinforcement cover made of a thread winding and/or interlaced threads, the reinforcement cover surrounding the fissile core.

## Description

The present invention relates to the field of nuclear fuel rods for use into nuclear fuel assemblies.

A nuclear fuel assembly for use in a light water nuclear reactor, such as a pressurized water reactors or a boiling water reactors, is elongated along a longitudinal axis and comprises a bundle of fuel rods extending along the longitudinal axis, the fuel rods being supported by an armature, each fuel rod comprising a nuclear fuel encased into a cladding made of a cladding tube closed by end plugs at both ends of the cladding tube. The nuclear fuel received in the cladding tube is generally made of a plurality of pellets stacked into the cladding tube.

A light water nuclear reactor comprises a reactor vessel receiving a reactor core made of a plurality of nuclear fuel assemblies having their longitudinal axes oriented vertically and arranged side-by-side. The reactor vessel is configured for a coolant to flow vertically through the reactor core, such that the coolant flows along the nuclear fuel assemblies with moderating the nuclear reaction and retrieving heat from the nuclear fuel rods of the nuclear fuel assemblies.

A potential risk of operating such a light water nuclear reactor is that the cladding tube of a nuclear fuel rod may be damaged during severe accidental conditions such as a Loss of Coolant Accident (or "LOCA"), with the risk that nuclear fuel contained in the cladding tube may be dispersed into the coolant.

One of the aims of the invention is to allow improving the resistance and security of nuclear fuel rods.

To this, the invention proposes a nuclear fuel element configured for insertion into a cladding tube of a nuclear fuel rod, the nuclear fuel element extending along a central axis and comprising a fissile core made of fissile material and a reinforcement cover made of a thread winding and/or interlaced threads, the reinforcement cover surrounding the fissile core.

The reinforcement cover fitted onto the fissile core limits exposure of the fissile core to the outside environment and the risk of dispersion of the fissile material in case of failure of the cladding tube.

The reinforcement cover reinforces the resistance of the cladding tube against breach during transients of the nuclear reactor by partly absorbing the energy of the expansion of the fissile core that expands more rapidly than the cladding tube during transients of the nuclear reactor.

The reinforcement cover reduces the risk of failure due to the interaction between fissile core and the cladding tube, in particular between pellet(s) of the fissile core and the cladding tube (known as pellet-cladding interaction or "PCI"). Such failures may be due to missing portions of pellet(s) forming the fissile core, the reinforcement cover being able to contain such damaged pellets when fitted onto a fissile core.

The reinforcement cover may acts as a barrier between the fissile core and the cladding tube with limiting the interaction of aggressive chemical products that are produced by the fissile core and that may cause failure of the cladding tube, for example due to stress corrosion cracking (also known as "SCC").

The reinforcement cover may improve thermal transfer between the fissile core and the cladding tube thus lowering the temperature of the fissile core, in particular in a center part thereof, and thus improving safety.

In specific examples, the nuclear fuel element comprises one or several of the following optional features, taken in isolation or according to any technically feasible combination:
- the reinforcement cover comprises a thread winding;
- the reinforcement cover comprises interlaced threads that are braided, knitted and/or weaved ;
- the threads of the reinforcement cover are made of metal, silicon carbide and/or carbon;
- the reinforcement cover is meshed;
- the reinforcement cover comprises a matrix that covers the thread(s) of the reinforcement cover;
- the fissile core comprises at least one pellet wrapped individually by the reinforcement cover and/or at least one stack of pellets wrapped into the reinforcement cover;
- the fissile core is formed of one single pellet and/or one single stack of pellets;
- the fissile material contains uranium, in particular uranium dioxide;
- the reinforcement cover comprises metal threads arranged into a mesh structure;
- the reinforcement cover comprises a winding of silicon carbide thread(s) and/or a winding of carbon thread(s).
- the reinforcement cover comprises interlaced silicon carbide threads and/or carbon threads.

The invention also relates to a nuclear fuel rod comprising a cladding tube and a nuclear fuel element as defined above fitted into the cladding tube.

The invention also relates to a method of manufacturing a nuclear fuel element configured for insertion into a fuel rod cladding for obtaining a nuclear fuel rod, the method comprising the steps of manufacturing a reinforcement cover made of a thread winding and/or interlaced threads, obtaining a fissile core and inserting the fissile core into the reinforcement cover.

The invention also relates to a method of manufacturing a nuclear fuel rod comprising obtaining a cladding tube, providing one or several nuclear fuel elements as defined above inside the cladding tube and sealing the cladding tube.

The invention and its advantages will be better understood upon reading the following description of examples that are given solely as non-limiting examples and with reference to the appended drawings, in which:
- Figure 1 is a longitudinal sectional view of a nuclear fuel rod for use in a light water reactor comprising a cladding tube housing nuclear fuel elements;
- Figure 2 is a side elevation view of one of a nuclear fuel element of the nuclear fuel rod of Figure 1;
- Figure 3 is a longitudinal sectional view of the nuclear fuel element of Figure 2;
- Figure 4 is a transverse sectional view of the nuclear fuel element of Figure 2;
- Figures 5 - 7 illustrates steps of a method of manufacturing the nuclear fuel element of Figures 2 - 4; and
- Figure 8 is a longitudinal sectional view of a nuclear fuel element.

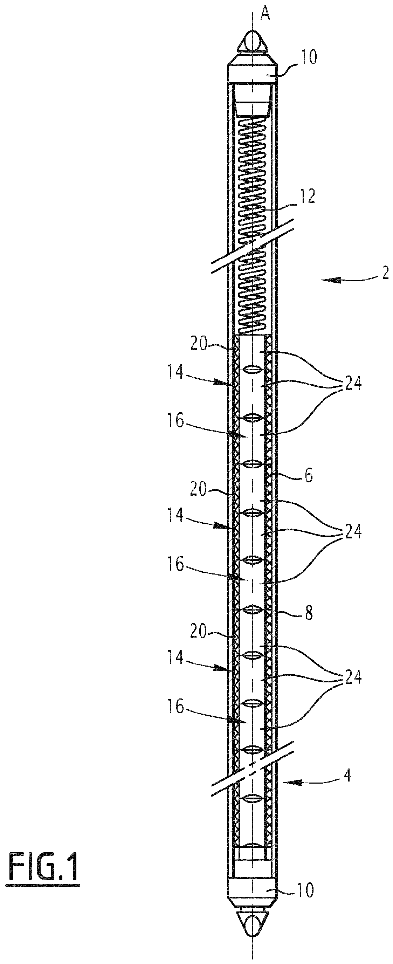

Figure 1 illustrates a nuclear fuel rod 2 adapted for example for use in a light water reactor, in particular a pressurized water reactor (PWR), a boiling water reactor (BWR), a "VVER" type reactor or a "RBMK" type reactor.

The nuclear fuel rod 2 is elongated along a longitudinal axis A. The nuclear fuel rod 2 comprises a cladding 4 containing nuclear fuel 6.

The cladding 4 comprises a cladding tube 8 extending along the longitudinal axis A. The cladding tube 8 is sealed at each end thereof, for example by end plugs 10, each end plug 10 closing a respective end of the cladding tube 8.

The nuclear fuel rod 2 includes a spring 12 disposed within the cladding tube 4 to push the nuclear fuel 6 axially. The spring 12 is for example positioned between the nuclear fuel 6 and one of the end plugs 10, to push the nuclear fuel 6 axially towards the other end plug 10.

The cladding 4 defines the outer envelope of the nuclear fuel rod 2. The cladding 4, and in particular the cladding tube 8, are in contact with the external environment.

The nuclear fuel 6 is provided as one or several nuclear fuel elements 14.

Each nuclear fuel element 14 contains fissile material that is capable of sustaining a nuclear chain reaction.

Each nuclear fuel element 14 is adapted for insertion into the cladding tube 8 of the nuclear fuel rod 2.

When the nuclear fuel 6 comprises several nuclear fuel elements 14, these fuel elements 14 are stacked longitudinally in the cladding tube 8.

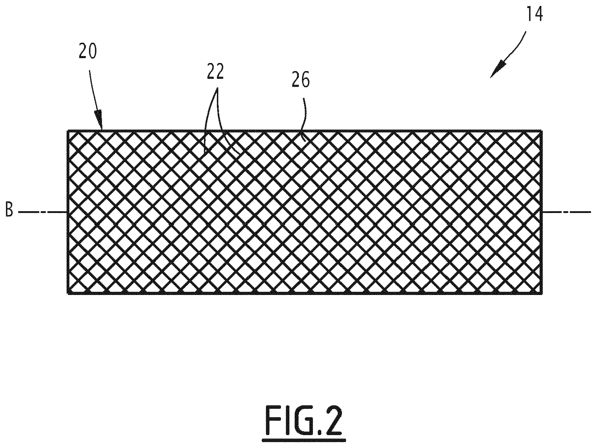

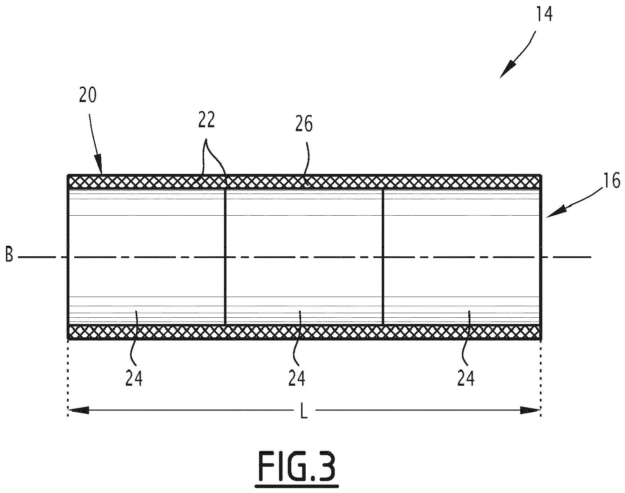

As illustrated on Figures 2 - 4, each nuclear fuel element 14 extends along a central axis B of the nuclear fuel element 14. When, the nuclear fuel element 14 is inserted into the cladding tube 8, the central axis B coincides with the longitudinal axis A of the cladding tube 8.

Each nuclear fuel element 14 has an outer contour that matches the inner cross-section of the cladding tube 8 such that the nuclear fuel element 14 can be fitted inside the cladding tube 8.

Each nuclear fuel element 14 comprises a fissile core 16 made of fissile material, the fissile core 16 being surrounded by a reinforcement cover 20 made of a thread winding and/or interlaced threads 22.

The fissile material contains for example uranium, in particular enriched uranium. The fissile material contains for example uranium provided as dioxide uranium (UO₂).

The fissile core 16 has for example a cylindrical shape extending along the central axis B and a circular cross-section. The fissile core 16 has a length L taken along the central axis B of the nuclear fuel element 14.

The fissile core 16 may comprise one single pellet 24 or a plurality of pellets 24, each pellet 24 being made of fissile material.

The fissile core 16 consists for example of one single pellet 24. In this case, this pellet 24 extends on the whole length L of the fissile core 16.

In case the fissile core 16 consists of one single pellet 24, this pellet is individually surrounded by the reinforcement cover 20.

The fissile core 16 is for example made of a plurality of pellets 24 stacked along the central axis B. In this case, each pellet 24 extends on a respective fraction of the length of the fissile core 16 and defines a respective section of the fissile core 16 along the central axis B. The pellets 24 are for example of the same length along the central axis B. The pellets 24 are preferably identical.

In case the fissile core 16 consists of as stack of a plurality of pellets 24, these stacked pellets 24 are collectively surrounded by the reinforcement cover 20.

The reinforcement cover 20 is for example tubular along the central axis B of the nuclear fuel element 14

The reinforcement cover 20 covers the fissile core 16 laterally, i.e. circumferentially with respect to the central axis B.

Preferably, in any cross-section of the nuclear fuel element 14 taken perpendicularly to the central axis B in a plane passing through the fissile core 16, the reinforcement cover 20 completely circumvents the fissile core 16.

The reinforcement cover 20 extends preferably along the entire length of the fissile core 16 along the central axis B.

If the fissile core 16 is made of a plurality of pellets 24 stacked along the central axis B, the reinforcement cover 20 extends along the plurality of pellets 24, each one of the plurality of pellets 24 forming the fissile core 16 being received inside the reinforcement cover 20.

If the fissile core 16 is made of a plurality of pellets 24 stacked along the central axis B, the reinforcement cover 20 is configured to hold the plurality of pellets 24 together.

The reinforcement cover 20 is for example open at one of the axial ends of the reinforcement cover 20 or open at both axial ends of the reinforcement cover 20.

In such case, the reinforcement cover 20 only partially covers the fissile core 16. Indeed, one of the axial ends of the fissile core 16 is not covered by the reinforcement cover 20 or both axial ends of the fissile core 16 are not covered by the reinforcement cover 20.

In the example illustrated on Figures 2 - 4, the reinforcement cover 20 is opened at both axial ends of the reinforcement cover 20.

In another example, the reinforcement cover 20 is opened at one of the axial ends of the reinforcement cover 20 and closed at the other one of the axial ends of the reinforcement cover 20.

In another example, the reinforcement cover 20 is closed at both axial ends of the reinforcement cover 20. In such case, the reinforcement cover 20 fully covers the fissile core 16.

The nuclear fuel element 14 comprising the fissile core 16 surrounded by the reinforcement cover 20 can be handled as a single unit.

The reinforcement cover 20 is made of a thread winding and/or interlaced threads 22. In other words, the reinforcement cover 20 is made of one or several threads 22 wound and/or interlaced to form the reinforcement cover 20.

The reinforcement cover 20 is made for example by winding, braiding, knitting and/or weaving one or several threads 22.

Each thread 22 of the reinforcement cover 20 may be made of metal wire(s), carbon fiber(s) or silicon carbide fiber(s). A thread 22 made of wire(s) or fiber(s) may be made of a fiber or wire or a group of fibers or wires, e.g. a group of fibers or wires twisted together.

The reinforcement cover 20 may be made of any material that is capable of being arranged into a reinforcement cover 20 that is capable of surrounding the fissile core 16 and providing reinforcement to the fissile core 16, in particular for holding together a plurality of pellets 24 forming the fissile core 16 or retaining material of the fissile core 16.

The reinforcement cover 20 may be made for example of metal, silicon carbide or carbon. Each thread 22 is thus made of a metal, silicon carbide or carbon.

In one example, the reinforcement cover 20 exhibits a meshed structure. Such a reinforcement cover 20 is for example made of a plurality of threads 22 that are interlaced to form a tubular mesh.

In one example, the reinforcement cover 20 is a tubular mesh made of interlaced metal threads 22. A reinforcement cover 20 provided as a mesh exhibits an open framework with through openings.

In one example, the reinforcement cover 20 is solid. In such case, the reinforcement cover 20 is deprived of through opening along the reinforcement cover 20. The thread(s) of the reinforcement cover 20 is/are arranged to avoid any through opening in the reinforcement cover 20. The thread(s) 22 of the reinforcement cover 20 is/are tightly wounded or interlaced, such that there is no opening through the reinforcement cover 20.

In one example, a reinforcement cover 20 is made of a thread winding. In such case, the thread(s) are wound to form a tube extending along the central axis B. The thread(s) may be wound for form one layer or several superposed layers.

In one particular example, the thread winding is a winding of one or several silicon carbide thread(s) or a winding of one or several carbon thread(s).

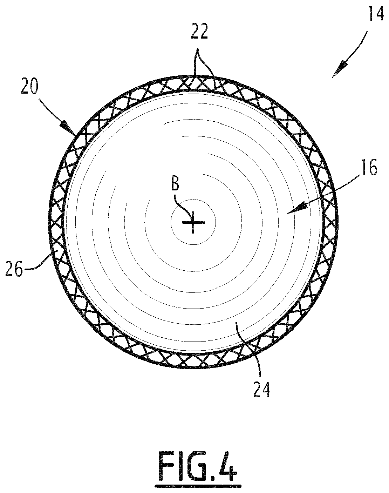

As illustrated on Figure 4, in one example, the reinforcement cover 20 is made of interlaced threads, in particular of braided, knitted and/or weaved threads.

In such case, the threads are braided, knitted and/or weaved to form a tube extending along the central axis B.

In one example, the interlaced threads are made of carbon fibers and/or silicon carbide fibers. In one particular example, the interlaced threads are made of carbon fibers. In another particular example, the interlaced threads are made of silicon carbide fibers.

Optionally, the reinforcement cover 20 comprises a matrix 26, the thread(s) of the reinforcement cover 20 being covered by the matrix 26 or embedded in the matrix 26. The matrix 26 is made for example of a plastic material.

The reinforcement cover 20 is for example made of a so-called composite material defined by the matrix 26 reinforced by the thread(s) 22 embedded into the matrix 26. The thread(s) is/are wounded and/or interlaced.

Such a reinforcement cover 20 is obtained for example by winding and/or interlacing thread(s) 22 that are pre-impregnated by the material of the matrix 26, e.g. pre-impregnated silicon carbide fibers and/or pre-impregnated carbon fibers.

The matrix 26 is only optional. In one example, the reinforcement cover 20 is deprived of such a matrix 26. The reinforcement cover 20 thus consists of the thread(s) arranged into a thread winding and/or interlaced threads.

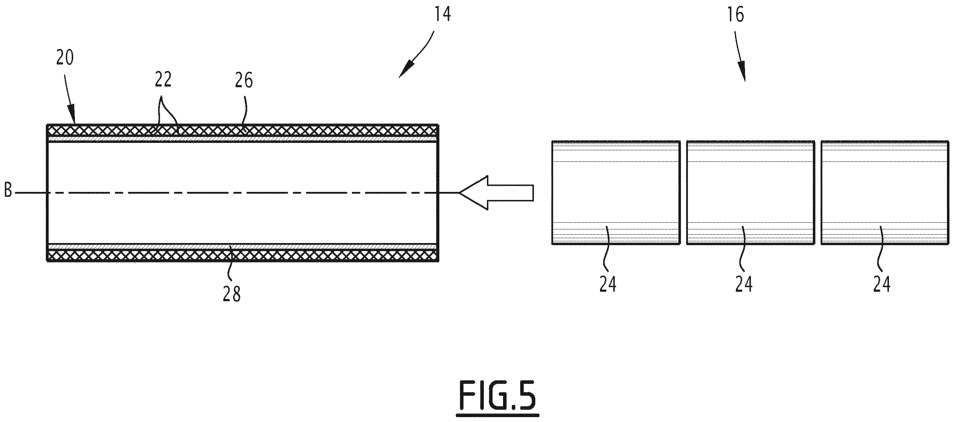

As illustrated on Figures 5 - 7, a method of manufacturing the nuclear fuel element 14 comprises for example the steps of obtaining the fissile core 16, manufacturing the reinforcement cover 20 and inserting the fissile core 16 into the reinforcement cover 20.

As visible on Figure 5, the fissile core 16 is obtained before or after the manufacturing of the reinforcement cover 20.

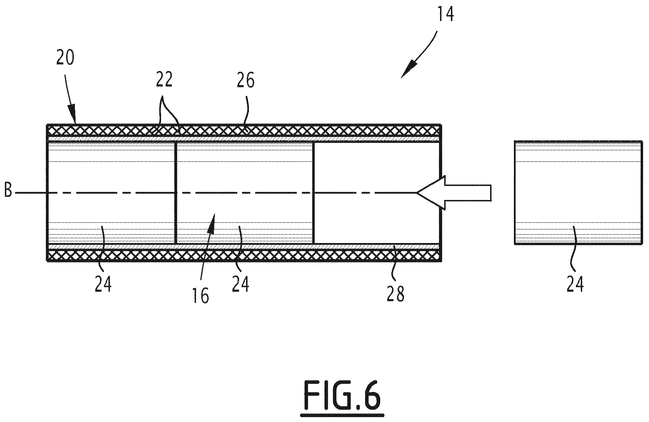

The fissile core 16 is obtained for example by obtaining one pellet 24 in case the fissile core 16 consists of one pellet 24 or, several pellets 24 in case the fissile core 16 is made of a stack of several pellets 24 as illustrated on Figure 6.

The pellets 24 are manufactured in a known manner. In case the fissile material of the fissile core 16 contains or consists in uranium dioxide (UO₂), the fissile core 16 or pellets 24 of the core is/are obtained for example by compaction of uranium dioxide powder.

The reinforcement cover 20 is for example manufactured separately from the fissile core 16, before inserting the fissile core 16 into the reinforcement cover 20.

The reinforcement cover 20 is for example manufactured by winding one or several threads 22 and/or interlacing several threads 22 onto a mandrel 28 and then removing the mandrel 28 from the reinforcement cover 20 and inserting the fissile core 16 inside the reinforcement cover 20.

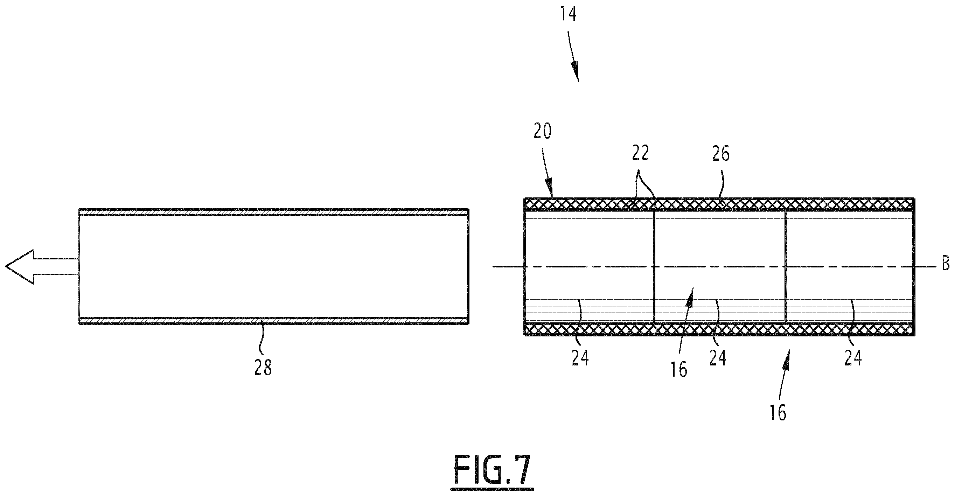

As illustrated on Figures 5 - 7, in one example, the reinforcement cover 20 is manufactured around a mandrel 28 that is tubular (Figure 7), the fissile core 16 is then inserted inside the mandrel 28, for example by inserting the pellet(s) 24 forming the fissile core 16 inside the mandrel (Figure 6), and the mandrel 28 is then removed from the reinforcement cover 20 while maintain the fissile core 16 inside the reinforcement cover 20, such that the fissile core 16 is now received inside the reinforcement cover 20 (Figure 7).

In another example, the fissile core 16 is inserted inside the mandrel 28, for example by inserting the pellet(s) 24 forming the fissile core 16 inside the mandrel 28, the reinforcement cover 20 is then manufactured around a mandrel 28 and the mandrel 28 is then removed from the reinforcement cover 20 while maintain the fissile core 16 inside the reinforcement cover 20, such that the fissile core 16 is now received inside the reinforcement cover 20.

In both examples, the insertion of the fissile core 16 inside the mandrel 28 with the reinforcement cover 20 manufactured around the mandrel 28 and the removal of the mandrel 28 are performed such as to obtain the nuclear fuel element 14, and then this nuclear fuel element 14 is inserted into the cladding tube 8 for manufacturing the nuclear fuel rod 2.

Alternatively, the assembly formed of the mandrel 28 and the reinforcement cover 20 manufactured around the mandrel 28 is inserted inside the cladding tube 8, then the fissile core 16 (e.g. nuclear fuel pellets 14) is inserted into the mandrel 28 and then the mandrel 28 is removed thus obtaining the nuclear fuel element 14 inside the cladding tube 8, and then the cladding tube 8 is sealed.

In the example illustrated on Figures 5 - 7, the reinforcement cover 20 is tubular and opened at both axial ends of the reinforcement cover 20.

In other embodiments, the reinforcement cover 20 may be closed at one axial end thereof or both axial end thereof.

In one example, the reinforcement cover 20 is manufactured with one axial end closed and one axial end opened for allowing insertion of the fissile core 16. The other axial end is left opened or closed after insertion of the fissile core 16, e.g. by providing the opened axial end of the reinforcement cover 20 with extra length relative to the fissile core 16 and closing this axial end of the reinforcement cover 20 after insertion of the fissile core 16.

In another example, the reinforcement cover 20 is manufactured with both axial ends opened for allowing insertion of the fissile core 16. One axial end is closed and the other is left open or both axial and are closed after insertion of the fissile core 16, e.g. by providing each axial end of the reinforcement cover 20 to be closed with extra length relative to the fissile core 16 and closing said axial end of the reinforcement cover 20 after insertion of the fissile core 16.

A opened end of the reinforcement cover 20 with extra length may be closed by twisting the extra length of the reinforcement cover 20 to create a constriction.

The invention is not limited to a nuclear fuel element 14 comprising a reinforcement cover 20 that is tubular and receives one single pellet 24 wrapped individually into the reinforcement cover 20 or a stack of pellets 24 wrapped collectively into the reinforcement cover 20.

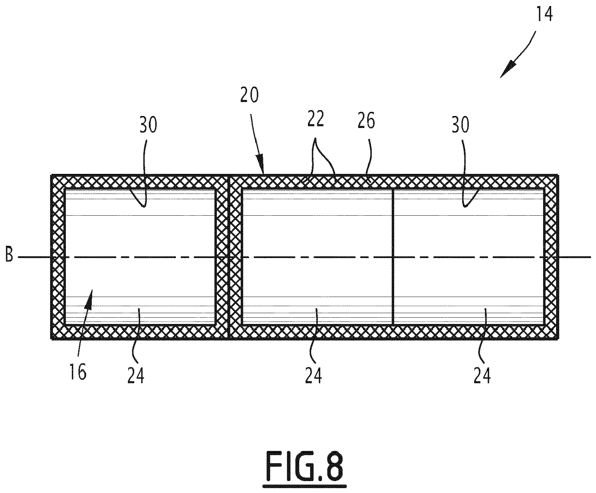

As illustrated on Figure 8, in one example, a nuclear fuel element 14 comprises a reinforcement cover 20 configured to define several separated compartments 30 along the central axis of the nuclear fuel element 14, each compartment 30 receiving fissile material of the fissile core 16.

Each compartment 30 receives for example one single pellet 24 or a stack of pellets 24.

As illustrated on Figure 8, one compartment 30 receives one single pellet 24 and another compartment 20 receives two pellets 24. In addition, both axial ends of the reinforcement cover 20 are closed.

The separation between adjacent compartments 30 is obtained for example by twisting the reinforcement cover 20 to create a constriction.

In a general manner, the fissile core 16 comprises for example at least one pellet 24 wrapped individually by the reinforcement cover 20 and/or at least one stack of pellets 24 wrapped by the reinforcement cover 20.

A method of manufacturing a nuclear fuel rod 2 comprises obtaining a cladding tube 8, providing one or several nuclear fuel elements 14 inside the cladding tube 8 and sealing the cladding tube 8.

In one embodiment, each nuclear fuel element 14 is manufactured and then inserted inside the cladding tube 8.

In another embodiment, the reinforcement cover 20 is inserted inside the cladding tube 8 before inserting the fissile core inside the reinforcement cover 20.

The reinforcement cover 20 fitted onto the fissile core 16 limits exposure of the fissile core 16 to the outside environment and the risk of dispersion of the fissile material, e.g. in case of failure of the cladding tube 8.

The reinforcement cover 20 reinforces resistance of the cladding tube 8 against breach during transients of the nuclear reactor by partly absorbing the energy of the expansion of the fissile core 16 that expands more rapidly than the cladding tube 8 during transients of the nuclear reactor.

The reinforcement cover 20 reduces the risk of failure due to the interaction between the fissile core 16 and cladding tube 8, in particular between pellet(s) 24 of the fissile core 16 and the cladding tube 8 (known as pellet-cladding interaction or "PCI"). Such failures may be due to missing portions of the fissile core 16, the reinforcement cover 20 being able to contain such damages when fitted onto a fissile core 16.

The reinforcement cover 20 may act as a barrier between the fissile core 16 and the cladding tube 8 with limiting the interaction of aggressive chemical products that are produced by the fissile core 16 during the nuclear reaction and that may cause failure of the cladding tube 8, for example due to stress corrosion cracking (also known as "SCC").

The reinforcement cover 20 may improve thermal transfer between the fissile core 16 and the cladding tube 8 during operation of the nuclear reactor, thus lowering the temperature of the fissile core 16, in particular in a central part thereof, and thus improving security.

The reinforcement cover 20 may act as a barrier to light water reactor coolant in case of breach of the cladding 4. It thus improves the washout behavior of the fissile core 16.

## Claims

1. Nuclear fuel element configured for insertion into a cladding tube (8) of a nuclear fuel rod (2), the nuclear fuel element (14) extending along a central axis (B) and comprising a fissile core (16) made of fissile material and a reinforcement cover (20) made of a thread winding and/or interlaced threads (22), the reinforcement cover (20) surrounding the fissile core (16).

2. Nuclear fuel element as in claim 1, wherein the reinforcement cover (20) comprises a thread winding.

3. Nuclear fuel element as in claim 1 or 2, wherein the reinforcement cover (20) comprises interlaced threads (22) that are braided, knitted and/or weaved (20).

4. Nuclear fuel element as in any one of the preceding claims, wherein the threads (22) of the reinforcement cover (20) are made of metal, silicon carbide and/or carbon.

5. Nuclear fuel element as in any one of the preceding claims, wherein the reinforcement cover (20) is meshed.

6. Nuclear fuel element as in any one of the preceding claims, wherein the reinforcement cover (20) comprises a matrix (26) that covers the thread(s) of the reinforcement cover (20).

7. Nuclear fuel element as in any one of the preceding claims, wherein the fissile core (16) comprises at least one pellet (24) wrapped individually by the reinforcement cover (20) and/or at least one stack of pellets (24) wrapped into the reinforcement cover (20).

8. Nuclear fuel element as in any one of the preceding claims, wherein the fissile core (16) is formed of one single pellet (24) and/or one single stack of pellets (24).

9. Nuclear fuel element as in any one of the preceding claims, wherein the fissile material contains uranium, in particular uranium dioxide (UO₂).

10. Nuclear fuel element as in any one of the preceding claims, wherein the reinforcement cover (20) comprises metal threads arranged into a mesh structure.

11. Nuclear fuel element as in any one of the preceding claims, wherein the reinforcement cover (20) comprises a winding of silicon carbide thread(s) and/or a winding of carbon thread(s).

12. Nuclear fuel element as in any one of the preceding claims, wherein the reinforcement cover (20) comprises interlaced silicon carbide threads and/or carbon threads.

13. Nuclear fuel rod (2) comprising a cladding tube (8) and a nuclear fuel element (14) as in any one of the preceding claims fitted into the cladding tube (8).

14. Method of manufacturing a nuclear fuel element (14) configured for insertion into a fuel rod cladding for obtaining a nuclear fuel rod, the method comprising the steps of manufacturing a reinforcement cover (20) made of a thread winding and/or interlaced threads (22), obtaining a fissile core (16) and inserting the fissile core (16) into the reinforcement cover (20).

15. Method of manufacturing a nuclear fuel rod (2) comprising obtaining a cladding tube (8), providing one or several nuclear fuel elements (14) as per any one of claims 1 - 13 inside the cladding tube (8) and sealing the cladding tube (8).
